**Europäisches Patentamt**

**European Patent Office**

**Office européen des brevets**

(19)

(11) Veröffentlichungsnummer: **0 152 057**
**A2**

(12) **EUROPÄISCHE PATENTANMELDUNG**

(21) Anmeldenummer: **85101219.5**

(22) Anmeldetag: **06.02.85**

(51) Int. Cl.⁴: **G 01 C 22/02**

(30) Priorität: **13.02.84 DE 3405081**

(43) Veröffentlichungstag der Anmeldung:
**21.08.85 Patentblatt 85/34**

(84) Benannte Vertragsstaaten:
**AT BE CH DE FR GB IT LI LU NL SE**

(71) Anmelder: **PUMA-Sportschuhfabriken Rudolf Dassler KG**
**Würzburger Strasse 13**
**D-8522 Herzogenaurach(DE)**

(72) Erfinder: **Dassler, Armin A.**
**Christoph-Dassler-Strasse 1**
**D-8522 Herzogenaurach(DE)**

(74) Vertreter: **Hufnagel, Walter, Dipl.-Ing.,**
**Dipl.-Wirtsch.-Ing. et al,**
**Dorner & Hufnagel Patentanwälte Bad Brückenauer Str. 19**
**D-8500 Nürnberg 90(DE)**

(54) **Sportschuh für Laufdisziplinen und Verfahren zur Informations- abgabe und/oder zum Informationsaustausch über Bewegungsabläufe.**

(57) Bei einem Sportschuh für Laufdisziplinen bzw. bei einem Verfahren zur Informationsabgabe und/oder zum Informationsaustausch über Bewegungsabläufe bei Laufdisziplinen soll die Aufgabe gelöst werden, u.a. Sportschuhe so auszugestalten, daß der Sportler über sein gerade ablaufendes oder bereits absolviertes Trainingsprogramm oder über die Ergebnisse von früheren Wettkämpfen jederzeit ausreichend informiert ist. Gelöst wird diese Aufgabe dadurch, daß in einem beim Laufen weniger beanspruchten Bereich (4', 4", 4''', 4'''') der Sohle (2) wenigstens ein Freiraum (3', 3", 3''', 3'''') vorgesehen ist, in dem ein Sender untergebracht ist, der über einen in der Sohle (2) vorgesehenen Sensor (11) wenigstens ein Ausgangssignal über eine Leitung und/oder über einen Strahler (32) als akustische und/oder optische und/oder elektromagnetische Strahlung ausgeben kann.

FIG. 2

PUMA-Sportschuhfabriken
Rudolf Dassler KG

8522 Herzogenaurach

**0152057**

— 1 —

Sportschuh für Laufdisziplinen und Verfahren zur Informationsabgabe und/oder zum Informationsaustausch über Bewegungsabläufe bei Laufdisziplinen

Die vorliegende Erfindung bezieht sich auf einen Sportschuh für Laufdisziplinen und auf ein Verfahren zur Informationsabgabe und/oder zum Informationsaustausch über Bewegungsabläufe bei Laufdisziplinen mit zwei Schuhen gemäß den Oberbegriffen der Ansprüche 1 und 17.

Bei Sportarten, bei denen das Laufen über lange Strecken, Mittelstrecken oder auch Kurzstrecken besondere Anforderungen an den Sportler stellt, ist das Training der Sportler oft in besonderem Maße auf den Bewegungsablauf der Gliedmaßen, insbesondere der Beine abgestellt. Hierzu werden vom Sportler selbst oder von einem Trainer oft bestimmte Trainingsprogramme erstellt. Von besonderer Bedeutung sind hierbei die Möglichkeiten der Überwachung des Trainingsablaufs und/oder der erzielten Ergebnisse. Diese sollten notiert und mit früheren Daten oder Solldaten verglichen und/oder analysiert werden, um den Trainingsstand oder den Weiterbildungsgrad erkennen oder mit der notwendigen Sicherheit abschätzen zu können, um daraus Schlüsse auf weitere, eventuell auch andere Trainingsstufen oder -abläufe zu ziehen.

Aufgabe der Erfindung ist es daher, unter anderem Sportschuhe so auszugestalten, daß der Sportler über sein gerade ablaufendes oder bereits absolviertes Trainingsprogramm oder über die Ergebnisse von früheren Wettkämpfen jederzeit ausreichend informiert ist.

Erfindungsgemäß wird diese Aufgabe durch die im Kennzeichen des Anspruches 1 und des Anspruches 17 angegegebenen Merkmale gelöst.

Durch die erfindungsgemäßen Maßnahmen ist es möglich, während des Laufens ständig Informationen über wenig-stens die wichtigsten Laufphasen oder Bewegungsabläufe, insbesondere über die Schrittlänge und gegebenenfalls auch über die Laufgeschwindigkeit und gelaufene Strecken oder Streckenabschnitte zu erhalten. Der Sportler kann diese Informationen dann gezielt dazu nutzen, um sein Lauf- oder Trainingsverhalten und/oder -programm gegebenenfalls zu ändern. Die erhaltenen Informationen werden daher auf ein Gerät ausgegeben und dem Sportler und/oder seinem Trainer und/oder einer Zentrale übermittelt. Gegebenenfalls werde diese Informationen gespeichert, zumindest kurzzeitig zwischengespeichert, und sie können auch in einem Rechner in ein Programm oder in eine Programmänderung überführt werden.

Es ist zwar bereits beim Skisport bekannt, im Helm des Skiläufers einen Empfänger und einen Lautsprecher oder Kopfhörer anzubringen, über den der Sportler während des Trainings oder des Wettkampfes Anweisungen seines Trainers erhalten kann. Diese Informationen beruhen jedoch ausschließlich auf der intuitiven Vorstellung des Trainers und nicht auf spezifischen Meßergebnissen und sie tragen insbesondere nicht der momentanen körperlichen Verfassung des Sportlers Rechnung. Derartige Informationen können daher für den Sportler unter anderem auch sehr nachteilige Folgen haben, wie Überlastung oder vorzeitigen Kräfteverschleiß. Bei Anwendung der Erfindung können diese Nachteile völlig vermieden werden.

Weitere vorteilhafte Einzelheiten der Erfindung sind in den Unteransprüchen angegeben und werden nachfolgend anhand eines in der Zeichnung veranschaulichten Ausführungsbeispieles näher beschrieben. Dabei zeigen:

Fig. 1 eine Schuhsohle von unten gesehen, teilweise im Schnitt,

Fig. 2 einen Schuh von der Seite gesehen mit teilweise geschnittener Schuhsohle,

Fig. 3 eine vergrößerte Darstellung des Kreisausschnittes gemäß Fig. 2,

Fig. 4
und 5 je einen Sohlen- oder Absatzausschnitt und

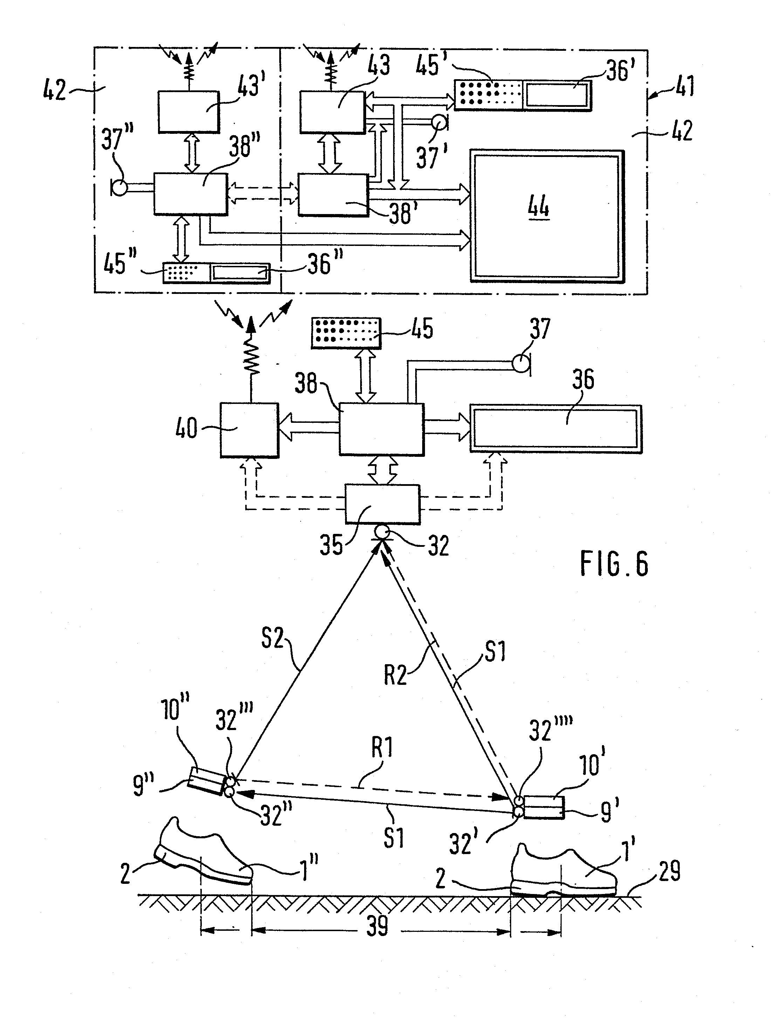

Fig. 6 ein Flußdiagramm zur Auswertung der erhaltenen Informationen, einschließlich der Informationsausgabe und/oder der Programmübermittlung.

In einem Sportschuh 1 für Laufdisziplinen, insbesondere
zum Einsatz über längere Distanzen, wie beispielsweise
beim Joggingsport, aber auch für Mittel- oder Kurzstrecken oder für die Anlaufstrecke von Weitsprung,
Hochsprung, Stabhochsprung oder dgl., ist in dem Sohlenkörper 2 wenigstens ein Freiraum 3', 3", 3"', 3"" vorgesehen. Dieser oder diese Freiräume 3', 3", 3"', 3""
sind in Bereichen der Laufsohle vorgesehen, in denen
beim Laufen normalerweise die geringsten Belastungen
auftreten, also beispielsweise in den mittleren Sohlenpartien im Bereich 4' vor dem Bereich 5 des Fußballens 6
oder im Bereich 4" hinter dem Bereich 5 oder im Bereich
4"' im Gelenk bzw. vor dem Fersenbereich 8 oder im Bereich 4"" in der mittleren Zone 7 des Fersenbereiches 8.

In wenigstens einem der Freiräume 3' bis 3"" ist ein
Sender 9 und gegebenenfalls auch ein Empfänger 10 und
gegebenenfalls zumindestein Sensor 11 und eine Batterie
12 vorgesehen. Sender 9, Empfänger 10, Sensor 11 und
Batterie 12 können in verschiedenen Freiräumen untergebracht und miteinander verbunden bzw. in Wirkverbindung sein. Diese Bauteile sind in den Freiräumen 3'
bis 3"" schockabsorbierend untergebracht, indem sie
beispielsweise in einem hochelastischen Sohlenkörper 2
oder in einer hochelastischen, insbesondere geschäumten
Zwischensohle 13 stoßgesichert gelagert oder mit einer
schockabsorbierenden Hülle 14 umgeben sind.

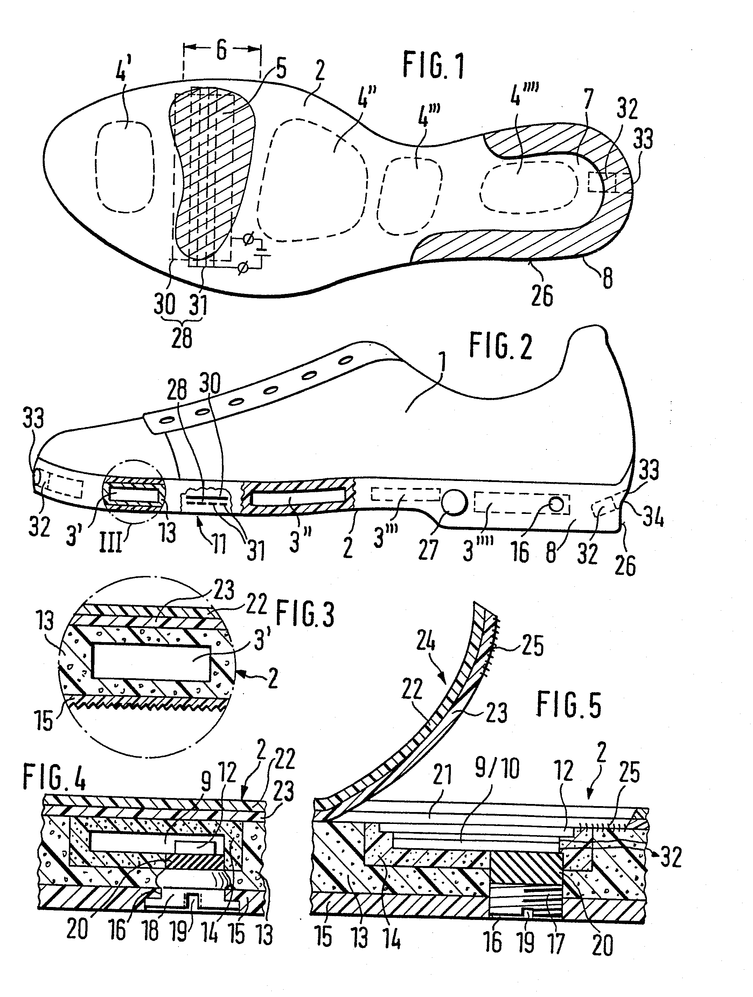

Die Bauteile 9, 10, 11, 12 sind in die Sohle 2 bzw.
Zwischensohle 13 eingeformt, vorzugsweise von dem
Sohlenmaterial umspritzt, oder sie können auch nachträglich einsetzbar sein. Letzteres kann durch eine
in der Laufsohle 15 vorgesehene Öffnung 16 erfolgen.
Die Öffnung 16 ist durch einen Deckel von außen dicht
verschließbar. Zu diesem Zweck ist der Deckel vorzugsweise als Schraubdeckel 17 (Fig. 5) oder als Schnappdeckel 18 (Fig. 4) ausgebildet und mit einer Werkzeugaussparung 19 zum Ein- und Ausdrehen bzw. zum Herausziehen versehen. Insbesondere ist die Öffnung 16 zum Austausch der Batterie 12 vorgesehen. Ein eventueller Zwischenraum zwischen Deckelinnenseite und dem Freiraum 3' bis 3"" oder den Bauteilen 9, 10, 11, 12 oder der Hülle 14 kann durch eine insbesondere am Deckel 17, 18 angebrachte elastische, vorzugsweise volumenkompressible Scheibe 20 ausgefüllt sein.

Eine Öffnung 21 kann auch in der Fußbettsohle 22 und/oder in der Brandsohle 23 vorgesehen sein und beispielsweise durch eine wenigstens zum Teil ausreißbare obere Sohlenpartie 24 geschlossen werden. Als Verschluß dient hierbei vorzugsweise ein Klettenverschluß 25.

Die Batterie 12 kann eine aufladbare Zelle, beispielsweise eine Nickel-Cadmium-Zelle, sein und in die Lauf- oder Zwischensohle 2, 13 mit eingeformt werden. Die Ladung erfolgt dann über ein äußeres Netzgerät, entweder induktiv, beispielsweise über eine Koppelschleife in der Sohle oder über eine vorzugsweise an einer Seitenwand 26 des Schuhes 1 vorgesehene, dicht verschließbare Ladebuchse 27.

Als Sensor 11 kann ein Drucksensor, beispielsweise ein auf Druck ansprechender elektrischer Schalter 28, wie ein Folienschalter, ein Piezoelement, ein Hallelement oder dgl. vorgesehen sein. Dieser Druckschalter 28 kann beim Laufen bei jedem Auftreffen des Schuhes 1 auf dem Boden 29 (Fig. 6) wenigstens einen Kontakt 30, 31 unmittelbar oder mittelbar schließen und/oder öffnen und damit beispielsweise als Ausgangssignal einen elektrischen Impuls ausgeben. Bei genügend großer Leistung wird das Ausgangssignal direkt oder bei kleinerer Leistung über den Sender 9 verstärkt und über einen Strahler 32 ausgegeben. Letzterer ist beispielsweise ein Ultraschallwandler oder eine Infrarotlichtquelle, vorzugsweise eine Infrarot-LED (lichtemittierende Diode), oder eine Induktionsspule, insbesondere eine Antennenspule. Vorzugsweise gibt der Sender 9 einen Impuls bestimmter Länge und Frequenz aus, beispielsweise für 0,01 bis 0,2 sec eine Frequenz von 40 kHz, also im Ultraschallbereich. Diese Frequenz kann auch amplituden-, frequenz- oder puls-code-moduliert sein.

Die Strahler 32 sind günstigerweise in Öffnungen 33 in der rückwärtigen Sohlenwandung 34 angeordnet, wobei die Öffnung 33 durch eine geeignete, für die Ausgangssignale wenig dämpfende Abdeckung verschlossen ist.

Der Strahler 32 ist vorteilhaft so angebracht, daß er je nach Anwendungszweck eine Richtcharakteristik nach hinten oder nach vorne oder nach der Seite hat. Zugleich ist er jeweils auch noch derart angeordnet, daß er schräg nach oben abstrahlen kann, so daß ein am Körper, z.B. am Gürtel, des Sportlers getragener Informationsempfänger 35 die ausgestrahlte Information gut empfangen kann.

Der Informationsempfänger 35 zählt im einfachsten Fall die aufgenommenen Ausgangssignale und zeigt sie sofort oder auf Abruf an einer Anzeige 36 an und/oder gibt die jeweilige Schrittzahl über einen Schallwandler 37, beispielsweise ein Mikrophon oder einen Kopfhörer als Ton und/oder über einen Sprachsynthesizer als synthetische Worte aus. Aus der Laufstrecke kann dann der Sportler die mittlere Schrittlänge ermitteln. Umgekehrt kann der Sportler nach einiger Zeit, wenn er seine übliche Schrittlänge kennt, aus der Schrittzahl die gelaufene Distanz ermitteln, was bei Trainingsläufen, besonders in unbekanntem Gelände, wichtig ist. Zweckmäßig ist im Informationsempfänger 35 ein Rechner 38 vorgesehen oder es ist ein extern zugeordneter, am Körper des Sportlers getragener Rechner 38 ansteuerbar, der diese Umrechnung nach Eingabe der Schrittlänge als Kontakte jeweils vorzugsweise getaktet, d.h. beispielsweise 1 bis 4 mal pro Sekunde, anzeigt und damit laufenddie zurückgelegte Distanz an die Anzeige 45 ausgeben kann.

Im Informationsempfänger 35 oder im Rechner 38 ist vorzugsweise ein Zeitmesser mit insbesondere einer Hundertstel- oder eine Tausendstel-Teilung vorgesehen oder integriert, so daß er aus der eingegebenen Schrittlänge und aus der Zeit die jeweilige Momentangeschwindigkeit berechnen und ausgeben kann, wenn bei jedem Schritt gemessen wird und/oder die jeweilige Gesamtschrittzahl wird zur Berechnung der Durchschnittsgeschwindigkeit herangezogen. Vorzugsweise ist im Rechner 38 eine genügende Speicherkapazität vorgesehen, um die Daten eines jeden Schrittes aufzunehmen, um also feststellen zu können, wieviele Schritte in welcher Zeit getätigt werden und um gegebenenfalls auch die momentane Gesamtschrittzahl in der momentanen Gesamtzeit aufzunehmen. Hierdurch kann später jederzeit eine Tabelle oder Grafik erstellt und angezeigt oder ausgedruckt werden, aus der der Sportler einen Überblick über die Änderungen der Daten über die gelaufene Distanz erhält. Nach Optimierung der Daten durch den Sportler oder einen Trainer kann dann ein individuelles Programm für den Sportler erstellt werden. Dieses kann dem Rechner eingegeben werden, der es dann bei einem späteren Lauf mit den Momentanwerten vergleicht und daraus die Abweichung vom Sollprogramm berechnet und in Abhängigkeit von den Abweichungen hör- oder sichtbare Anweisungen so ausgibt, wie der Lauf verändert werden muß, um innerhalb der optimierten Werte zu bleiben.

Anstelle eines Drucksensors oder zusätzlich können auch noch andere Sensoren, wie beispielsweise Beschleunigungssensoren und/oder Wegstreckensensoren und/oder Schrittlängensensoren und/oder Geschwindigkeitssensoren in den Schuhen 1 vorgesehen sein, wobei auch deren Signale als Ausgangssignale dem Informationsempfänger 35 und dem Rechner 38 eingegeben werden, der daraus die genannten oder weitere Daten berechnet oder erstellt oder eine Programmoptimierung vornimmt.

Damit die Schrittlänge nicht erst durch die Messung einer durchlaufenen, vorgemessenen Strecke ermittelt werden muß, kann gemäß einer vorteilhaften, in Fig. 6 dargestellten Weiterbildung der Erfindung die Schrittlänge 39 direkt mit relativ kleiner Toleranz gemessen und der Meßwert direkt angezeigt und/oder dem Rechner 38 eingegeben werden. In dem dargestellten, in Laufrichtung vorderen Schuh 1' ist ein Sender 9' und ein Empfänger 10' und im hinteren Schuh 1" ist ein Sender 9" und ein Empfänger 10" untergebracht; beispielsweise jeweils ein Ultraschallsender und -empfänger mit den dazugehörigen Strahlern 32, beispielsweise Schallwandlern 32', 32", 32"' und 32"". Hierbei gibt beim Auftreten des Schuhes 1' auf den Boden 29 der Sender 9' ein Ausgangssignal S 1 aus, das vom Informationsempfänger 35 und vom Empfänger 10" des hinteren Schuhes 1" empfangen und durch Ansteuerung des Senders 9" von diesem als Ausgangssignal S 2 an den Informationsempfänger 35 ausgegeben wird. Unter der Annahme, daß die Entfernung des Informationsempfängers 35 von den beiden Schuhe 1' und 1" etwa gleich groß ist, ist das vom Informationsempfänger 35 empfangene Ausgangssignal S 2 um die Laufzeit des Signals S 1 vom vorderen Schuh 1' zum hinteren Schuh 1" verzögert. Daraus kann die jeweilige Schrittlänge 39 direkt ermittelt werden. Toleranzen, die dadurch auftreten können, daß beispielsweise die Schallwandler 32' und 32" beim vorderen Schuh 1' im Absatz und beim hinteren Schuh 1" in der Spitze oder in einer Seite vorgesehen sind, können durch einen konstanten Korrekturfaktor, der beispielsweise in den Rechner 38 eingegeben werden kann, korrigiert werden.

Es besteht auch die Möglichkeit, im vorderen Schuh 1' noch einen Empfänger 10' vorzusehen, der das reflektierte oder vom Sender 9" ausgegebene Reflexionssignal R 1 empfängt und dann dem Informationsempfänger 35 als Reflexionssignal R 2 zuleitet. Hier wird die Strecke 39 zweimal durchlaufen und daher die Schrittlänge doppelt angegeben, die dann im Rechner 38 halbiert werden muß, um wieder den richtigen Meßwert zu erhalten. Die vom Rechner 38 ermittelten Ergebnisse, also beispielsweise die momentane Schrittlänge, die momentane Schrittge-schwindigkeit, die momentane Laufgeschwindigkeit, Ge-samtschrittzahl, Gesamtstrecke, Gesamtzeit, Durch-schnittsgeschwindigkeit, die noch zu laufende Distanz, oder auch der Vergleich mit einem Programm und die errechneten Korrekturanweisungen oder dgl. können an der Anzeige 36 angezeigt und/oder am Schallwandler 37 als Ton unterschiedlicher Tonhöhe und/oder Tonfolge und/oder als synthetische Sprache ausgegeben werden.

Gemäß einer vorteilhaften Weiterbildung der Erfindung können die Daten des Informationsempfängers 35 und/oder des Rechners 38 über einen Datensender 40 abgestrahlt und an eine Empfangsstation 41, beispielsweise beim Trainer oder bei einer Sportler- oder Trainerzentrale 42 oder bei einem Rechenzentrum übersandt werden. Dort werden diese Daten von einem Datenempfänger 43 aufgenommen und über die Anzeige 36 oder über eine Großanzeige 44 und/oder über einen Schallwandler 37' bzw. 37" angezeigt oder ausgegeben und/oder einem oder mehreren weiteren Rechner(n) 38', 38" eingegeben und über diesem bzw. diese berechnet und angezeigt.

Dem Datenempfänger 43 und/oder den Rechnern 38' bzw. 38" kann noch eine Eingabetastatur 45' bzw. 45" mit Anzeigen 36' bzw. 36" zugeordnet werden, um ein Programm eingeben und/oder korrigieren zu können und/oder angezeigt zu erhalten.

Auch kann ein Zeitmesser in dem oder in den Rechner(n) 38, 38', 38" integriert oder diesem bzw. diesen zugeordnet sein, der mit dem oder mit den Rechner(n) 38, 38', 38" in Datenaustausch steht und zu Rechenzwecken einsetzbar ist.

Auch ist es günstig, wenn dem oder den Rechner(n) 38 , 38', 38" ein Trainingsprogramm eingegeben wird, wobei dieser oder diese aus den von den Schuhsendem 9, 9', 9" übermittelten Daten die Werte der im Programm enthaltenen Kenngrößen, wie Schrittlänge, Geschwindigkeit oder dgl. ermittelt oder ermitteln. Des weiteren vergleicht oder vergleichen der oder die Rechner die übermittelten Daten mit den im Programm gespeicherten Werten dieser Kenngrößen. Gegebenenfalls kommt bzw. kommen dem oder den Rechner(n) noch weitere Funktionen zu, wie die Ermittlung von Abweichungen, die Ausgabe der ermittelten Daten an die Sportler, die Abspeicherung, Ausdruckung oder Einspeicherung von Programmen, einschließlich deren Korrekturen und/oder die Erstellung neuer Programme.

0152057

Die Empfangsstation 41 kann auch als Trainerzentrale 42 für eine Vielzahl von Sportlern eingerichtet sein. In diesem Falle werden die Signale frequenz- oder amplituden- oder puls-code- moduliert, um die Daten der einzelnen Sportler getrennt empfangen und auswerten zu können. Dementsprechend besteht dann die Empfangsstation 41 aus einer entsprechenden Anzahl von Datenträgern 43, 43', 43" usw. und Rechnern 38', 38" usw. Auch können in diesem Falle die Rechner 38', 38" usw. zu einer zentralen Recheneinheit zusammengefaßt sein.

Gemäß einer weiteren vorteilhaften Ausgestaltung der Erfindung können Sender und Empfänger in den Schuhen 1' und 1" derart über zugeordnete Strahler aufeinander einwirken, daß beispielsweise nach dem Doppler-Prinzip die Relativgeschwindigkeit der beiden Beine zueinander gemessen werden kann, indem die entsprechenden Daten dem Rechner eingegeben und von diesem ausgewertet werden. Insbesondere ist es hierbei zweckmäßig, daß auch beim Abheben des Schuhes 1" vom Boden 29 ein Signal ausgegeben wird, das mit dem vom anderen Schuh 1' beim Auftreten ausgegebenen Signal weiterverarbeitet wird. Hierdurch kann die Meßgenauigkeit, vorzugsweise die der Schrittlängenmessung, noch erheblich gesteigert werden.

-------------

PUMA-Sportschuhfabriken
Rudolf Dassler KG
8522 Herzogenaurach

0152057

~1~

Patentansprüche

1. Sportschuh für Laufdisziplinen, dadurch gekennzeichnet, daß in einem beim Laufen weniger beanspruchten Bereich (4', 4", 4"', 4"") der Sohle (2) oder der Zwischensohle (13) wenigstens ein Freiraum (3', 3", 3"', 3"") vorgesehen ist, in dem ein Sender (9) untergebracht ist, der über einen in der Sohle (2) oder in der Zwischensohle (13) vorgesehenen Sensor (11), wie einen Kontakt (28; 30, 31) und/oder einen Drucksensor und/oder einen Beschleunigungssensor und/oder einen Schrittlängenmesser und/oder einen Wegsensor und/oder einen Geschwindigkeitssensor, wenigstens ein Ausgangssignal über eine Leitung und/oder über einen Strahler (32) als akustische und/oder optische und/oder elektromagnetische Strahlung ausgeben kann.

2. Sportschuh nach Anspruch 1, dadurch gekennzeichnet, daß in wenigstens einem Freiraum (3' bis 3"") auch ein Empfänger (10; 10', 10") oder ein Sende- Empfänger vorgesehen ist.

3. Sportschuh nach Anspruch 1 oder 2, dadurch gekennzeichnet, daß der Sender (9) und/oder Empfänger (10) in einem oder mehreren der Freiräume (3', 3", 3"', 3"") schockabsorbierend angeordnet ist bzw. sind.

4. Sportschuh nach einem der Ansprüche 1 bis 3, dadurch gekennzeichnet, daß der Sender (9) und/oder Empfänger (10) in einer elastischen, vorzugsweise volumenkompressiblen Zwischensohle (13) vorgesehen ist bzw. sind.

5. Sportschuh nach einem der Ansprüche 1 bis 4, dadurch gekennzeichnet, daß der Sender (9) und/oder Empfänger (10) und/oder eine zu dessen Betrieb erforderliche Batterie (12) über eine dicht verschließbare Öffnung (16) der Sohlenober- oder Sohlenunterseite (22, 23; 15) zugänglich, insbesondere austauschbar ist bzw. sind.

6. Sportschuh nach einem der Ansprüche 1 bis 5, dadurch gekennzeichnet, daß der Sender (9) und/oder Empfänger (10) selbst als Drucksensor und/oder Beschleunigungssensor ausgebildet ist bzw. diesen enthält.

7. Sportschuh nach einem der Ansprüche 1 bis 6, dadurch gekennzeichnet, daß am Schuh (1), insbesondere im Bereich der Sohle (2), ein dicht verschließbarer Ladeanschluß (27) für die Senderbatterie und/oder Empfängerbatterie (12) vorgesehen ist.

8. Sportschuh nach einem der Ansprüche 1 bis 7, dadurch gekennzeichnet, daß das oder die Ausgangssignale (S1, S2) des Senders (9) und/oder Empfängers (10) oder der zugehörigen Strahler (32) einem dem Benutzer und/oder dem Trainer und/oder einer Trainings- oder Rechenzentrale (41) zuzuordnenden Empfänger (43) oder einem Rechner (38') zugeleitet bzw. von diesem empfangen werden.

9. Sportschuh nach einem der Ansprüche 1 bis 8, dadurch gekennzeichnet, daß der oder die Rechner (38, 38', 38") aus den Eingangssignalen ein Trainingsprogramm entsprechend dem oder den empfangenen Ausgangssignal(en) (S1, S 2) des oder der Sender (9; 40) bildet und dem Benutzer und/oder dem Trainer in elektrischer, optischer oder akustischer Weise über den zurückliegenden und/oder derzeitigen und/oder zukünftigen Programmablauf informiert.

10. Sportschuh nach einem der Ansprüche 1 bis 9, dadurch gekennzeichnet, daß in der Wandung (26) der Sohle (2), vorzugsweise der Zwischensohle (13), seitliche Öffnungen (33) und/oder Durchlässe für elektromagnetische und/oder optische Strahlen vorgesehen sind.

11. Sportschuh nach einem der Ansprüche 1 bis 10, dadurch gekennzeichnet, daß der zurückgelegte Weg und/oder die Geschwindigkeit und/oder die Schrittlänge durch aus der Relativbewegung der beiden Beine zueinander erhaltenen Informationssignalen ermittelbar ist.

12. Sportschuh nach einem der Ansprüche 1 bis 11, dadurch gekennzeichnet, daß der Sender (9) bei jedem Auftreten und/oder Abheben des Schuhes (1) vom Untergrund (29) ein Signal abgibt.

13. Sportschuh nach einem der Ansprüche 1 bis 12, dadurch gekennzeichnet, daß in einem Schuh (1") ein Sender (9") und ein Empfänger (10") vorgesehen sind und daß der Sender (9") ein Ausgangssignal (S 2) ausgibt, wenn der Empfänger (10") ein Ausgangssignal (S 1) des Senders (9') des anderen Schuhes (1') des Sportlers empfangen hat und daß beide Ausgangssignale (S 1, S 2) in eine Richtung abgestrahlt werden, in der sie von einem am Körper des Sportlers vorhandenen Empfänger (35) und/oder einer Informations- und/oder Empfangsstation (41; 43) empfangen werden und insbesondere verarbeitet werden können.

14. Sportschuh nach einem der Ansprüche 1 bis 13, <u>dadurch gekennzeichnet</u>, daß ein Zeitmesser in dem oder in den Rechner(n) (38, 38', 38") integriert oder diesem bzw. diesen zugeordnet ist, der mit dem oder mit den Rechner(n) (38, 38', 38") in Datenaustausch steht und zu Rechenzwecken einsetzbar ist.

15. Sportschuh nach einem der Ansprüche 1 bis 14, <u>dadurch gekennzeichnet</u>, daß Datenspeicher und/oder Datenzwischenspeicher in dem oder in den Rechner(n) (38, 38', 38") vorgesehen oder diesem bzw. diesen zugeordnet sind und mit diesem bzw. diesen zum Datenaustausch verbunden sind

16. Sportschuh nach einem der Ansprüche 1 bis 15, <u>dadurch gekennzeichnet</u>, daß in der Sohle (2) oder in der Zwischensohle (13) eine Induktionsspule und ein Wechselspannungs- Gleichspannungsumformer zur Stromversorgung der Batterie (12) aus einer externen Wechselspannungsquelle vorgesehen ist.

17. Verfahren zur Informationsabgabe und/oder zum Informationsaustausch über Bewegungsabläufe bei Laufdisziplinen mit zwei Schuhen gemäß einem der Ansprüche 1 bis 16, <u>dadurch gekennzeichnet</u>, daß beim Auftreffen des vorderen Schuhes (1') auf dem Boden (29) vom Sender (9') dieses Schuhes (1') ein Ausgangssignal ( S 1) ausgegeben und derart abgestrahlt wird, daß es sowohl von einem am Körper des Sportlers vorgesehenen Empfänger (35) als auch vom Empfänger (10") des hinteren Schuhes (1") empfangen werden kann, daß der Empfang des Ausgangssignals (S 1) durch den Empfänger (10") im hinteren Schuh (1") den im hinteren Schuh (1") vorhandenen Sender (9") veranlaßt, seinerseits ein Ausgangssignal (S 2) derart abzustrahlen, daß es entweder von dem am Körper des Sportlers vorgesehenen Empfänger (35) direkt oder über den vorderen Schuh (1') als Relaisstation empfangen werden kann, und daß aus den beiden von dem am Körper getragenen Empfänger (35) empfangenen, zeitlich verschobenen Ausgangssignalen (S1; S 1 + S 2 bzw. S.1; S 1 + R 1 + R 2) die Bein- oder Laufgeschwindigkeit und/oder die Schrittweite des Sportlers über ein dem Empfänger (35) zugeordnetes Rechenwerk (38) ermittelt und über eine optische Anzeige (36) und/oder einen akustischen Wandler (37) ausgegeben wird.

18. Verfahren nach Anspruch 17, dadurch gekennzeichnet, daß der oder die Rechner (38, 38', 38") aus den ermittelten Daten unter Verwendung einzugebener bekannter Daten ein Trainingsprogramm erstellt bzw. erstellen.

19. Verfahren nach Anspruch 17 oder 18, dadurch gekennzeichnet, daß dem oder den Rechner(n) (38, 38', 38") ein Trainingsprogramm eingegeben wird, daß dieser oder diese aus den von den Schuhsendern (9; 9', 9") übermittelten Daten die Werte der im Programm enthaltenen Kenngrößen, wie Schrittlänge, Geschwindigkeit oder dgl. ermittelt oder ermitteln und mit den im Programm gespeicherten Werten dieser Kenngrößen vergleicht oder vergleichen, gegebenenfalls die Abweichungen ermittelt oder ermitteln und insbesondere an den Sportler ausgibt oder ausgeben und/oder abspeichert oder abspeichern und/oder ausdruckt oder ausdrucken und/oder eingespeicherte Programme korrigiert oder korrigieren und/ oder ein neues Programm erstellt oder erstellen.

-------------

FIG.1

FIG.2

FIG.3

FIG.4

FIG.5

FIG.6